(19) Europäisches Patentamt
European Patent Office
Office européen des brevets

(11) **EP 1 794 900 B1**

(12) **EUROPEAN PATENT SPECIFICATION**

(45) Date of publication and mention
of the grant of the patent:
**06.09.2017 Bulletin 2017/36**

(51) Int Cl.:
***H04W 24/02*** *(2009.01)*     *H04W 36/18* *(2009.01)*

(21) Application number: **05805031.1**

(22) Date of filing: **21.07.2005**

(86) International application number:
**PCT/IB2005/052440**

(87) International publication number:
**WO 2006/027706 (16.03.2006 Gazette 2006/11)**

(54) **COMPENSATING RADIO COVERAGE RANGE UNBALANCES BY ADDING NOISE OR INTERFERENCE POSTERIOR TO THE DESPREADING OF RECEIVED SIGNALS FROM A PARTICULAR USER EQUIPMENT TO ENHANCE SIGNAL COMPONENTS**

KOMPENSIERUNG VON UNGLEICHHEITEN IN DER FUNKABDECKUNGSREICHWEITE DURCH ADDIERUNG VON LÄRM ODER INTERFERENZ NACH UNEINSPREITZEN VON EMPFANGSIGNALEN AUS EINEM GEWISSEN BENUTZERGERÄT, UM SIGNALKOMPONENTE ZU VERBESSERN

COMPENSATION DE DISPARITÉS DANS LA PORTÉE DE LA COUVERTURE RADIO AVEC L'ADDITION DE BRUIT OU D'INTERFÉRENCE APRÈS LE DÉSÉTALEMENT DES SIGNAUX REÇUS D'UN ÉQUIPEMENT D'UTILISATEUR PARTICULIER, AFIN D'AMÉLIORER LES COMPOSANTS DES SIGNAUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.08.2004 SE 0402003**

(43) Date of publication of application:
**13.06.2007 Bulletin 2007/24**

(73) Proprietor: **Telefonaktiebolaget LM Ericsson (publ)**
**164 83 Stockholm (SE)**

(72) Inventors:
• **HAGERMAN, Bo**
**S-135 52 TYRESÖ (SE)**
• **ÖSTMAN, Thomas**
**S-163 61 SPÅNGA (SE)**

(74) Representative: **Ericsson**
**Patent Development**
**Torshamnsgatan 21-23**
**164 80 Stockholm (SE)**

(56) References cited:
EP-A2- 0 546 849    EP-A2- 1 005 245
WO-A1-96/08936    WO-A1-97/34439
US-A- 5 548 812    US-A- 5 584 049
US-A- 5 722 044    US-A- 6 134 444

## Description

## TECHNICAL FIELD OF THE INVENTION

The present invention relates to communications. More especially it relates to handover of connections. Particularly it relates to soft handover of connections between cells or sectors providing optimized performance in handover boundary or region. This is very attractive in, e.g., CDMA ('Code Division Multiple Access') or WCDMA ('Wideband CDMA') systems, and multiple access systems based on OFDM ('Orthogonal Frequency Division Multiplex').

## BACKGROUND AND DESCRIPTION OF RELATED ART

Handover of connections as such are well known in the art. At hard handover one (old) communication link or path is released prior to a (new) communication link being completely established. However, the process is fast and hardly noticeable to a user during normal conditions in a well-designed system with good coverage. In contrast, at soft handover communication links are abandoned and established in such a manner that user equipment always keeps at least one communication link. According to prior art, generally some directional dependent hysteresis is included such that a required level for establishing a (new) communication path is greater than the level at which a (old) communication path is released or lost.

An active set is, in accordance with 3GPP specifications, a set of radio links simultaneously involved in a specific communication service between a User Equipment and a terrestrial radio access network access point.

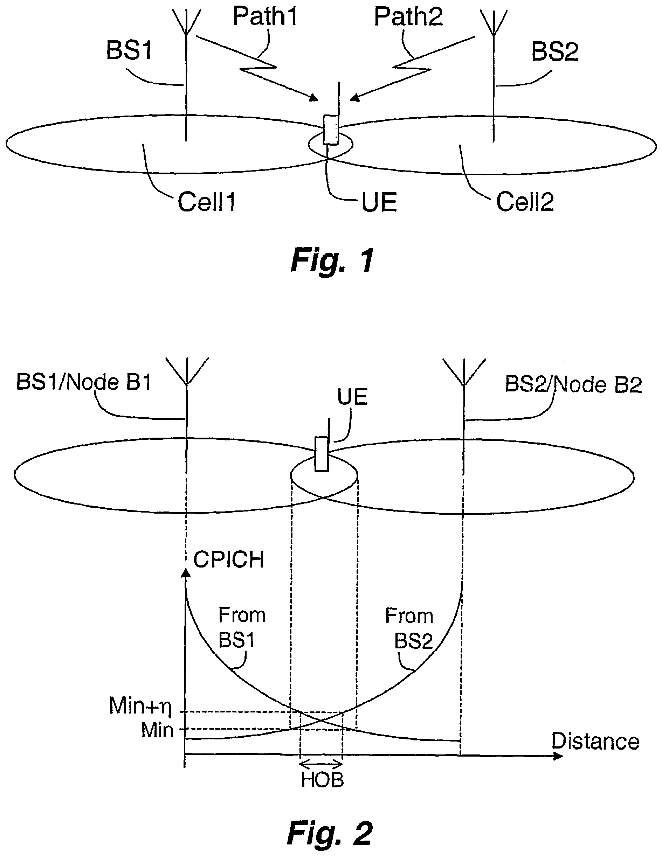

Figure 1 illustrates the principles of diversity handover or soft handover of User Equipment, UE, with two base stations «BS1», «BS2» of a radio access network, each base station serving a cell «Ce111», «Ce112». In the figure User Equipment «UE» has established communication paths «Path1», «Path2» with both base stations «BS1», «BS2».

In prior art systems, a measurement level considered for hand over decisions usually includes received power on a pilot channel. In UMTS ('Universal Mobile Telecommunications System'), e.g., the level considered is received power on (Primary) Common Pilot Channel, CPICH, at User Equipment, UE.

Figure 2 schematically illustrates the hysteresis of received power on CPICH from two different base stations/Nodes B «BS1/Node B1», «BS2/Node B2», at a User Equipment «UE» in a situation when a connection is established via a base station «BS2», while maintained via another base station «BS1». The region where the difference between received transmission power from the base stations «BS1», «BS2», is smaller than or equal to the hysteresis «η» is the handover boundary «HOB».

*International Patent Application* WO0232017 describes in relation to its figure 3 a transmit antenna array using a conventional soft handover scheme. Base stations Node B1 and Node B2 decrease their transmission power and at the same time UE calculates weights depending on a phase difference between the CPICH signals transmitted from the two Nodes B so as to maximize SINR ('Signal to Interference+Noise Ratio') and transmits the weights to the Nodes B. UE then soft-combines the signals received from the Nodes B according to the weights and determines weights maximizing SINR of the soft-combined signals.

*U.S. Patent* US6011971 discloses combined soft and hard handover and identifies a power control problem in relation to hard handover.

3rd Generation Partnership Project (3GPP): *Technical Specification Group Radio Access Network, Physical Layer Procedures, 3G TS 25.214 v3.3.0, France, June 2000,* describes out of synchronization handling. Briefly, poor quality link sets are indicated to be out of sync. Regarding uplink power control, the MS shall shut its transmitter off during downlink out-of-sync conditions. If the receive timing for any link, during soft handover, drifts to lie outside a valid range, information shall be provided, so that the network can adjust downlink timing.

Basically, according to the 3GPP technical specification a TPC command comprises one bit, indicating a power increase or decrease. However, the invention does not exclude basic TPC commands comprising more than one bit. Further according to the 3GPP technical specification, during soft handover there is one such basic TPC bit or TPC command for each of the links involved, to be combined into a TPC command. Consequently, the concept "TPC command" comprises both such basic and combined TPC commands. Regarding downlink power control, during out-of-sync periods the TPC command transmitted shall be set as "1", i.e. it shall indicate a power increase.

3rd Generation Partnership Project (3GPP): *Technical Specification Group Radio Access Network, Physical layer - Measurements (FDD), 3GPP TS 25.215 v6.0.0, France, December 2000,* specifies in section 5.2 UTRAN ('Universal Terrestrial Radio Access Network') measurements. In subsection 5.2.3. $SIR_{error}$ is defined:

$$SIR_{error} = SIR - SIR_{target\_ave} \, ,$$

where SIR is signal to interference ratio measured by UTRAN, in dB, and $SIR_{tafget\_ave}$ is an average of target signal to interference ratio, **SIRtarget,** averaged over the same time period as signal to interference ratio measured by UTRAN.

In compressed mode **SIRtarget** equals **SIRcm_target** and is not calculated over the transmission gap. The averaging of SIRtarget is made in linear scale, and **SIRtarget_ave** is in dB.

None of the cited documents above discloses a method and system providing optimized handover boundary or region of power control for continuous mobile station transmission power at handover with unsymmetrical handover ranges in terms of distance or pilot channel transmission power.

US 6 134 444 discloses a method and an apparatus for balancing uplink and downlink signal transmissions in a code-division multiple access communication system is disclosed. A system level change is performed and parameters related to the uplink and downlink transmissions are analyzed. The uplink and downlink transmissions are balanced by, inter alia, increasing or decreasing the downlink transmission power at a base-station, systematically adding loss or noise to a receiver located at a base-station or both.

US 5 548 812 discloses a method and an apparatus for matching the location of the forward link handoff boundary to the reverse link handoff boundary. A system constant is chosen which defines the product of the received power and the transmitted pilot power at every base station. The reverse link power level is measured at the base station and the forward link power level is compensated for the reverse link loading to maintain the constant product. Thereby the forward link handoff boundary to the reverse link handoff boundary are aligned to the same location.

US 5 584 049 discloses an apparatus and a method for adding and removing a target base station from a network of base stations, which includes base stations adjacent the target base station. The apparatus is comprised of two attenuators: a first for setting an artificial receive noise power level and a second for setting a transmit level. The transmit level determines the forward link coverage area of the base station. The artificial noise level sets the reverse link coverage area of the base station when a base station is added, initially the transmit power is low and the artificial receive power er is high such that the forward and reverse kink coverage areas are collocated in close proximity to the base station. As the base station blossoms into full operation, the artificial receive noise power is decreased and the transmit level is increased such that the two coverage areas of the base station remain balanced as the coverage areas expand. When a base station is to be removed from a system, the same attenuators are used to wilt the two coverage areas in unison as the power level transmitted from the base station decreases.

EP 0 546 849 discloses a mobile radio communication system in which a plurality of base stations, each having at least one communication channel, are arranged in a service area, and communication between mobile stations and the base stations is performed by using the communication channels, a base station coverage area control system includes noise sources. The noise sources are arranged inside the service area to be located around the respective base stations to generate noise having the same frequency as that of a communication signal from each of the base stations. The coverage areas of the base stations are controlled by transmitting the controlled noise from the noise sources.

WO 97/34439 discloses a method and an apparatus for providing centralized power control in a communication system, in which each base station in the system operates to control both the forward link and the reverse link power. A radio link manager provides a common threshold for determining the proper power level of the reverse link signal at each base station. The radio link manager also provides a ratio of the forward link signal strength to a pilot signal strength to control forward link power control. The radio link manager provides the threshold and ratio uniformly to all base stations to provide a uniform operating point for all base stations in the system, thus, increasing capacity. The same centralized power control is easily expanded to provide a mechanism for intersystem soft handoff.

## SUMMARY OF THE INVENTION

When designing soft handover to be established based upon 15 received power of a pilot channel, such as CPICH in WCDMA systems, the signal quality of the different handover or diversity branches may differ substantially. Also, received signal quality may differ substantially for uplink and downlink directions of a connection. This problem generally entails in, e.g., WCDMA and OFDM systems.

Among the reasons for this are:

     1. Noise or interference level at a base station of one diversity branch is substantially greater than at a base station of another diversity branch.

     2. Cell coverage in terms of received transmission power in downlink direction differs substantially from cell coverage in terms of SIR or SINR at UE.

     3. Antenna diagram, radiation pattern or footprint cannot be varied or would be too costly to vary.

     4. Different receiver sensitivity of base station receivers for different base stations.

Consequently, there is a need of providing eligible or optimized coverage patterns in relation to quality.

It is consequently an object of the present invention to achieve a communications system compensating for different coverage in uplink and downlink directions or different quality coverage in uplink or downlink of different cells.

A further object is to provide a method and system of quality control independent of base station receiver performance.

It is also an object to achieve a method and system of quality control independent of actual antenna gain of base station installation.

Another object is to provide a method and system tailored to the actual cell sites involved at a particular soft handover boundary.

**EP 1 794 900 B1**

Finally, it is an object to fully control cell size and optimize cell size for various radio access bearers, RABs, and the different requirements of the services they provide.

These objects are met by a method, a base station and a communication system according to the independent claims. Further embodiments are defined in the dependent claims.

Especially, the claimed subject-matter relate to compensation of unbalances between uplink or downlink directions of different base stations by noise or interference addition.

Embodiments described herein and relating to compensation of unbalances between uplink or downlink directions of different base stations by inclusion of noise or interference equivalent parameters for transmission power control are not within the scope of the appended claims.

Further, embodiments described herein and relating to determination of parameter level for transmission power control based on an indication provided by control symbols and a threshold conditions are not within the scope of the appended claims.

## BRIEF DESCRIPTION OF THE DRAWINGS

Figure 1 illustrates the principles of diversity handover or soft handover of User Equipment, UE, with two base stations «BS1», «BS2» each serving a cell «Cell1», «Cell2».

Figure 2 schematically illustrates the hysteresis of received power on CPICH from two different base stations/Nodes B according to prior art.

Figure 3 illustrates the interrelations between data rates/sub-channels and sub-codes/spreading factors for a code multiplexed system such as a WCDMA system.

Figure 4 illustrates example antenna coverage patterns in horizontal plane of two base stations for downlink and uplink together with downlink handover region of prior art and uplink handover region according to the invention.

Figure 5 schematically illustrates uplink transmission power «UL TP» emitted by a User Equipment versus position of the User Equipment.

Figure 6 illustrates schematically downlink transmission power emitted to a particular User Equipment versus position of the User Equipment when moving along an imaginary straight line between the two base stations of figure 4.

Figure 7 illustrates example ranges for a particular user in the form of antenna coverage patterns in horizontal plane of two base stations similar to those of figure 4.

Figure 8 schematically illustrates uplink transmission power versus position for User Equipment moving along an imaginary straight line in direction from the base station with greater uplink coverage range towards the base station «BS A» with less uplink coverage range in figure 7.

Figure 9 schematically illustrates base station downlink transmission power vs. position for a particular User Equipment moving along a straight line between two base stations in direction from base station of greater range of uplink coverage towards base station of less range of uplink coverage for the two example handover regions of figure 7.

Figure 10 illustrates by an example flow chart an alternative to noise injection in the receiver path according to the invention a second embodiment controlling noise addition in power control algorithm determining TPC ('Transmission Power Control') bits to send for uplink transmission power control according to the invention.

Figure 11 illustrates a principal block diagram of relevant parts of a base station operating according to the invention.

## DESCRIPTION OF PREFERRED EMBODIMENTS

When designing soft handover to be established based upon received power of a pilot channel, such as CPICH in WCDMA systems, the signal quality of the different handover or diversity branches may differ substantially. Also, received signal quality may differ substantially for uplink and downlink directions of a connection due to uplink and downlink unbalances. The differences can be dependent on UE position or instant distances to base stations. In relation to quality the differences cause coverage asymmetries. This problem generally entails in, e.g., WCDMA and OFDM systems.

The reason for this being a problem is at least fivefold:

1. When interference or noise level differs substantially in uplink direction to two or more base stations, power control algorithms will tend to keep transmission power at smallest possible level, this transmission power level will provide a sufficient quality at a base station with small interference and noise levels but not at more heavily disturbed base stations. Thereby, diversity gain from one or more additional branches with heavy noise or interference will be small or negligible.

* This may result in an old cell being kept too long for efficient use of resources or equivalently the handover boundary to a handover candidate is too far from the base station serving the old cell.

* Another consequence is increased interference level to other users of the already heavily disturbed base stations due to the established soft handover diversity branch at no or negligible performance gain to the disturbing user.

2. When handover is based on received power level and not on a power control related quality measure such as SIR or SINR, there is an increased risk of one or more communication branches to base stations being out of sync due to small SIR or SINR. This will increase the risk of a call being dropped.

3. Today's WCDMA systems are generally designed with power level of CPICH set equally at the antenna connector of transmitting base stations, with CPICH power level being set as a function of total available power at the base station. With handover boundaries being set based upon received power level of CPICH, cell boundary can only be controlled by antenna radiation pattern.

* Varying antenna radiation pattern may not be available at old antenna installations.

* Varying antenna radiation pattern could be very tedious or costly, depending on type of antenna.

Consequently, often it is not possible to adapt antenna radiation pattern in relation to varying surface distribution of traffic, which may end up in an excessive number of blocked calls.

4. When determining handover boundary in relation to received power on CPICH from different base stations, no regard is paid to possibly different sensitivity of the receivers of the different base stations. This could substantially affect the User Equipment transmission power required by different base stations. Consequently, there is an increased risk of dropped calls due to the disregard of actual receiver sensitivity.

5. Traffic capacity will deteriorate in terms of increased block rate particularly in a cell with inferior downlink coverage due to handover incapability, thereby prohibiting capacity optimization.

According to the invention quality is preferably measured in terms of signal to interference ratio, SIR, or signal to interference and noise ratio, SINR. Also according to the invention, virtually any quality measure with a strong relationship to the measure upon which power control is based could be used.

The invention also contributes to solving the power control problem of hard handover in CDMA systems described in International Patent Application WO0232017.

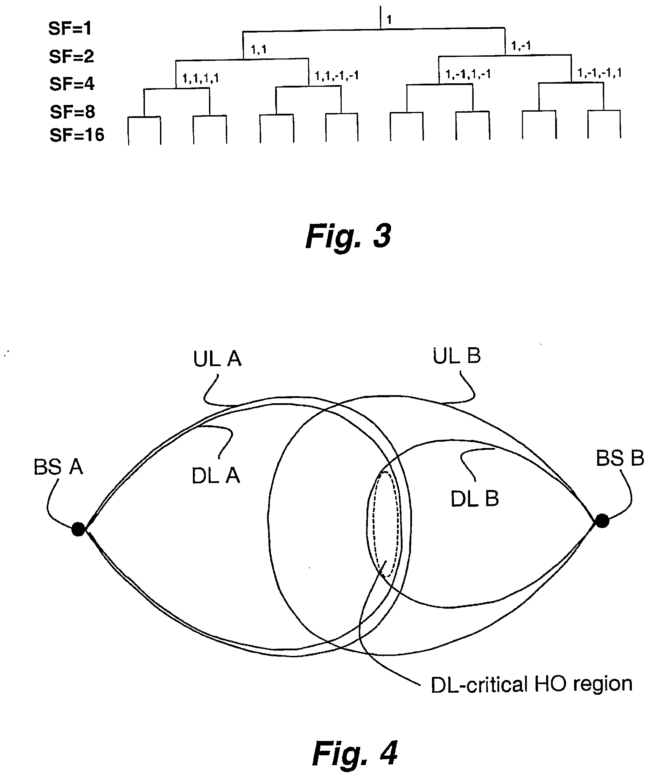

In Code Division Multiple Access, respective digital user signals are separated by individual spreading codes. Each code represents a spreading factor. Sub-channels or lower rate channels are separated by sub-codes with a greater spreading factor. Figure 3 illustrates the interrelations between data rates/sub-channels and sub-codes/spreading factors for a code multiplexed system such as a WCDMA system. It displays a binary code tree where a spreading factor, SF, equal to one occupies the entire code tree, i.e. all levels indicated by SF=2, SF=4, SF=8 and SF=16. This spreading factor translates into the highest user data rate. A sub-code with a spreading factor equal to two occupies only half the tree, the leftmost sub-tree or the rightmost sub-tree, in each case the sub-tree occupying the levels indicated by SF=4, SF=8 and SF=16 preventing other users from using the corresponding codes. Similarly, if a user is assigned a sub-code corresponding to a spreading factor equal to four, he occupies a sub-tree (and corresponding sub-channels) originating from the level indicated by SF=4 down to SF=16. Spreading factor four represents a medium user data rate. A user allocated a channel of spreading factor 16 occupies the lowest data rate in this example figure. Spreading codes for SF=1, SF=2 and SF=4 are denoted at the root of the corresponding sub-tree. This code tree is only an example not limiting the scope of the invention.

According to a preferred embodiment of the invention in a WCDMA system, for active user equipment noise or interference is adaptively added to a received signal in at least one uplink, thereby compensating for different power levels of CPICH at a chosen or optimized cell boundary or different uplink quality of different uplinks at an existing cell boundary determined from received power level of CPICH. If noise were added to the RF ('Radio Frequency') receiver path all radio links could possibly be affected by the noise. Accordingly, noise is hence added after despreading for a particular user of received signal in a WCDMA system. According to a preferred mode of the invention noise is added after despreading with spreading factor 4 (SF=4) when all radio links are despread with SF=4 prior to further despreading depending on allocated capacity. The noise could also be added to a group of users by injection at particular selected steps of despreading or selected spreading factor.

Similarly, in an example OFDM system where users share a great number of carriers and are allocated capacity of the shared carriers, noise is preferably added after filtering or inversely transforming a received signal enhancing signal components of a particular user.

A particular problem being one example cause of unbalances of uplink and downlink signal levels is the use of top mast amplifiers, TMAs, or low noise amplifiers, LNAs, in antenna masts of base station installations for uplink signals. The TMA amplifies received signal close to antenna feeder point and compensates for noise and attenuation of antenna cable to base station according to principles known in the art and thereby improves installation sensitivity. In downlink direction, however, noise and attenuation has to be compensated for by the base station. Without particular feedback of transmitted and received signal levels at antenna feeder point this match is hardly ever perfect. Further, antenna radiation patterns of transmit and receive antennas are rarely perfectly matched. In addition, CPICH is restricted by base station maximum transmission power and CPICH function of base station transmission power.

With mobile assisted handover, MAHO, user equipment measure received downlink signal level of common pilot channel, CPICH.

Figure 4 illustrates example ranges for a particular user in the form of antenna coverage patterns in horizontal plane of two base stations «BS A» and «BS B» for uplink «UL A», «UL B» and downlink «DL A», «DL B». In more detail, the solid lines of the respective coverage range patterns indicates a particular reception level for a user equipment transmitting/receiving signals on the line for a given transmission power level. In the figure uplink coverage range «UL A», «UL B» is substantially equal for both base stations «BS A», «BS B». Downlink coverage «DL A», «DL B» differs substantially for the two base stations «BS A», «BS B». This can be due to, e.g., the base stations «BS A», «BS B» operating with different power levels of CPICH. Attenuation of antenna feeder cables in some existing installations differs substantially between base stations. For downlink it is critical for maintaining a connection of a mobile moving towards either of the base stations «BS A», «BS B» that a handover of downlink connection has been established within a region of coverage «DL-critical HO region».

When downlink coverage and downlink capacity is allowed to influence also uplink handover region, according to the invention, the handover of also uplink would occur in handover region «DL-critical HO region» located closer to the base station of more limited downlink coverage «BS B» than indicated by the uplink coverage patterns.

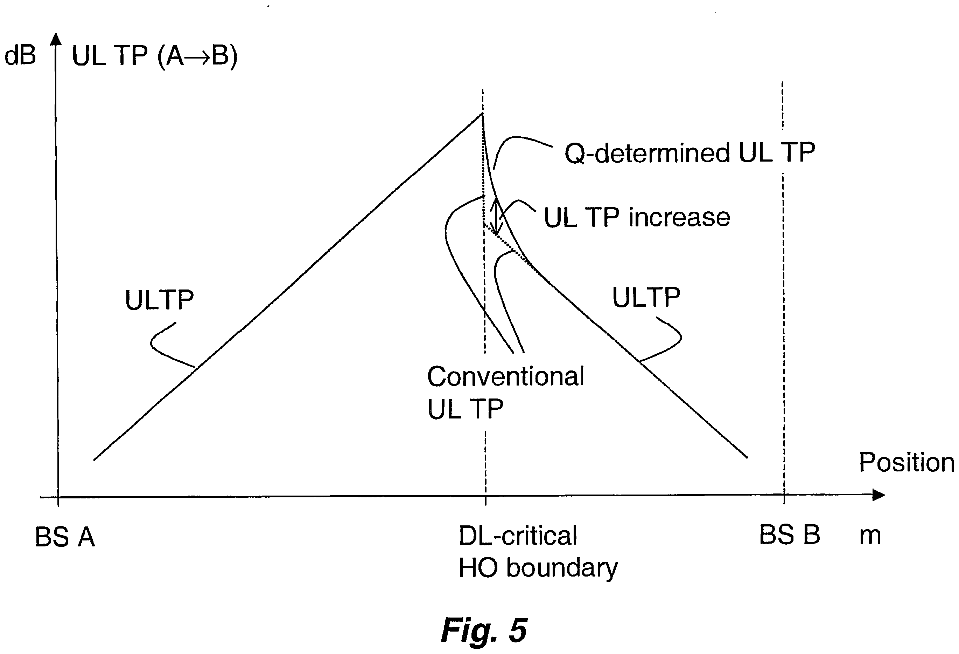

Figure 5 schematically illustrates uplink transmission power «UL TP» emitted by a User Equipment versus position of the User Equipment. In the figure the User Equipment position is moving along an imaginary straight line between the base stations «BS A», «BS B» illustrated in figure 4, the base stations «BS A», «BS B», having coverage patterns for the User Equipment corresponding to those in figure 4. In figure 5 User Equipment moving in direction from the base station «BS A» with comparatively greater coverage range towards a base station «BS B» with less coverage range «UL TP (A→B)». A feature is that transmission power «Q-determined UL TP» (solid line) is controlled to decrease smoother than for a conventional handover «Conventional UL TP» determined solely based upon downlink transmission power. This would cause a minor power increase «UL TP increase» as compared to the conventional handover in the entered cell. With its smooth variation vs. distance, this can be balanced by other users' injected noise/interference.

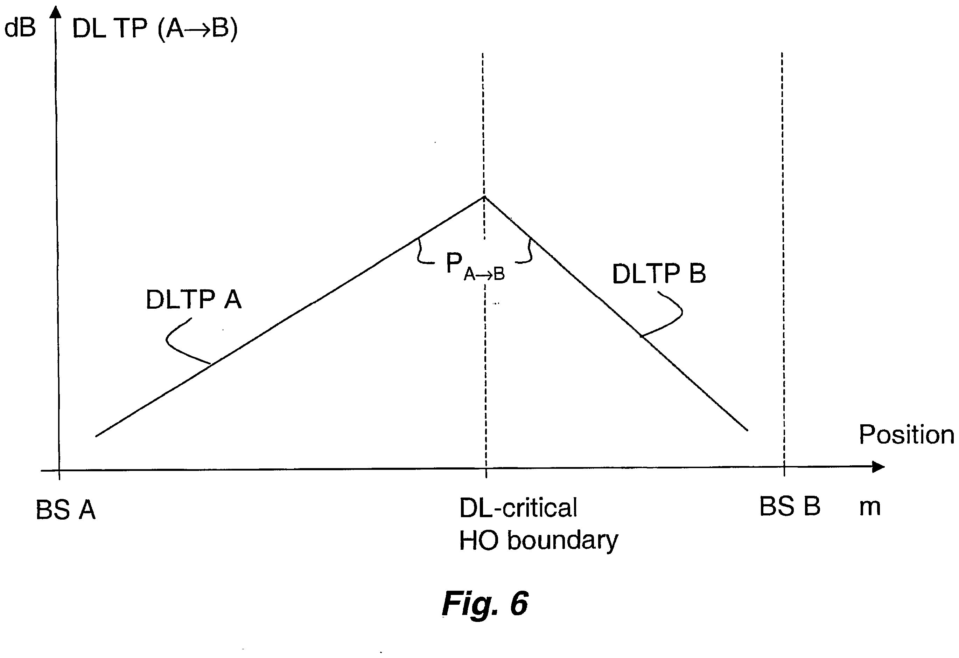

Figure 6 illustrates schematically downlink transmission power «DL TP (A→B)», «$P_{A→B}$» emitted to a particular User Equipment versus position of the User Equipment when moving along an imaginary straight line between the two base stations of figure 4 «BS A», «BS B». Essentially, the downlink transmission power comprises transmission power «DL TP A» from the base station of greater coverage range «BS A» prior to handover and transmission power «DL TP B» from the base station of less range «BS B» when handover has been executed which is illustrated to occur at the left dotted line «Q-determined HO boundary».

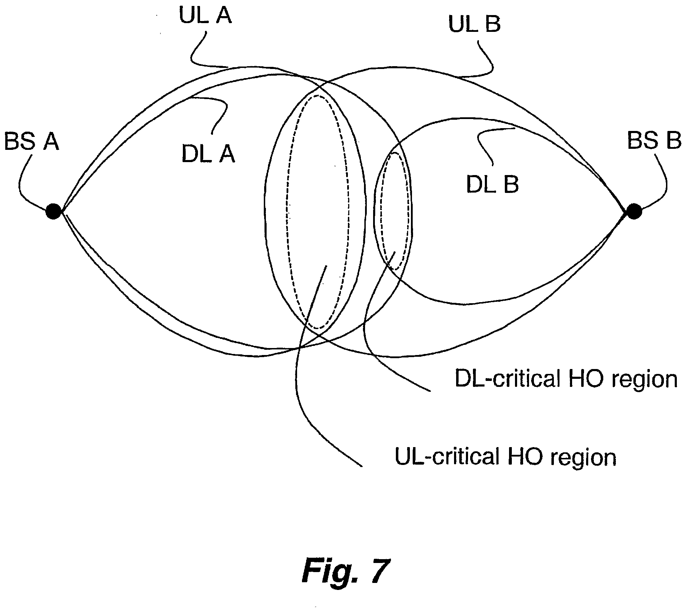

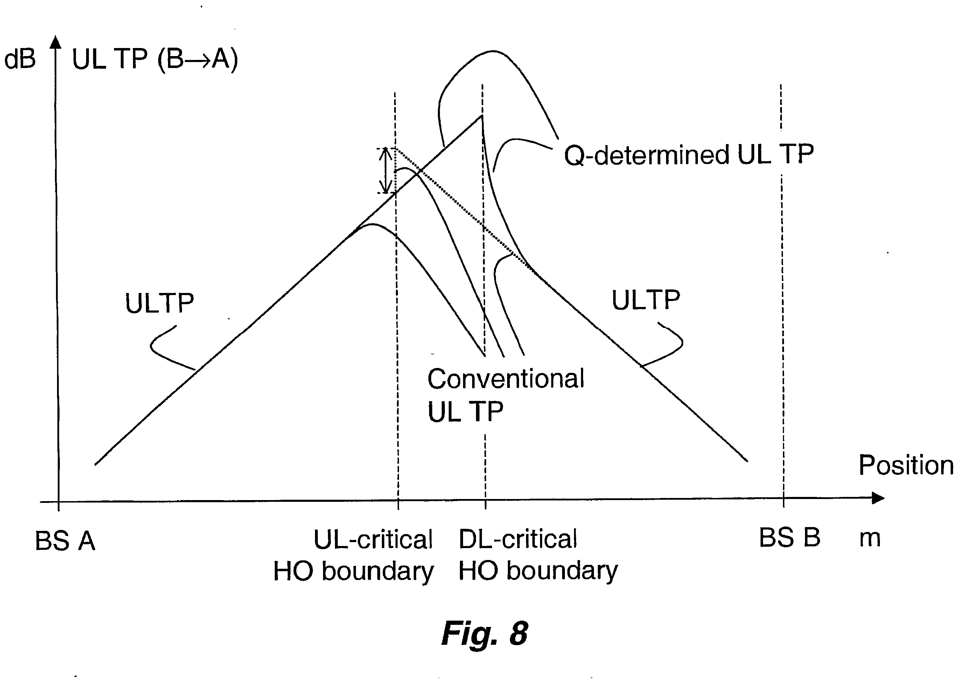

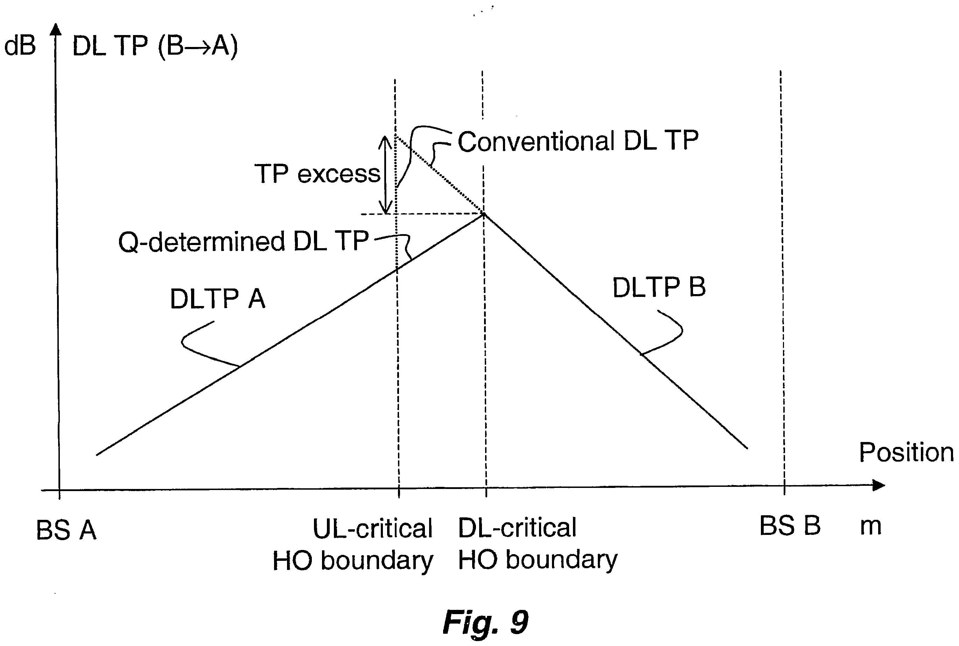

Figure 7 illustrates example ranges for a particular user in the form of antenna coverage patterns in horizontal plane of two base stations «BS A», «BS B» similar to those of figure 4. The downlink coverage «DL A», «DL B» of the base stations «BS A», «BS B» is identical to that of figure 4. In contrast to figure 4, figure 7 comprises somewhat different uplink coverage «UL A», «UL B» of the two base stations in relation to a User Equipment. The range differences can be due to e.g. different interference conditions or different sensitivity of the base station receivers. In addition to figure 4 a second handover region «UL-critical HO region» is included. Within this region it is critical for maintaining a connection of a mobile moving towards either of the base stations «BS A», «BS B» that a handover of uplink connection has been established. For the example coverage ranges there is a great risk of losing connection when moving in direction from base station B to base station A using conventional handover due to User Equipment not getting in-sync with the base station «BS A» of less uplink coverage range. This will be explained in further detail in relation to figures 8 and 9.

Figure 8 schematically illustrates uplink transmission power «UL TP (B→A)» versus position for User Equipment moving along an imaginary straight line in direction from the base station «BS B» with greater uplink coverage range towards the base station «BS A» with less uplink coverage range in figure 7. With conventional handover User Equipment would increase uplink transmission power «Conventional UL TP» as it comes further away from the base station it is leaving. As the User Equipment advances further away from the base station it is leaving «BS B» the greater is the required uplink transmission power «Conventional UL TP», «UL TP». This is the case until the User Equipment is in sync with the base station it is approaching «BS A». Due to the less uplink coverage range of the approached base station «BS A» and the limited transmission power of UE, UE is required to get closer to the approached base station «BS A» with conventional handover «Conventional HO boundary» than according to the invention. Thereby, interference level is increased in the cell/sector served by the approached base station «BS A», which is not compensated for in the same sense as according to the invention. According to the «Q-determined UL TP», User Equipment increases transmission power «UL TP» due to noise injection as described above. Due to the power increase User Equipment can get in sync with the base station it is approaching «BS A» at a position closer to the base station it is leaving than would be the case for conventional handover «Conventional handover boundary». Accordingly, the uplink handover boundary could be close to the downlink handover boundary (depending on hysteresis level) «Q-determined HO boundary» and the possible interference increase in the cell served by the base station UE is leaving «BS B» could be balanced by noise injection and choice of hysteresis.

Figure 9 schematically illustrates base station downlink transmission power «DL TP (B→A)» vs. position for a particular User Equipment moving along a straight line between two base stations, «BS A», «BS B» in direction from base station of greater range of uplink coverage «BS A» towards base station of less range of uplink coverage for the two example handover regions of figure 7. The downlink transmission power relates to the uplink transmission power in figure 8. As explained in relation to figure 8, with uplink transmission power according to conventional handover «Conventional UL TP» UE is required to be comparatively closer to the approached base station than with uplink transmission power according to the «Q-determined UL TP» for UE uplink to acquire in-sync status and the handover be executed. This can be due to, e.g., greater sensitivity of the distanced base station «BS B» rendering greater range uplink coverage. This leads to differences also concerning downlink. With reference to figure 9, according to conventional handover transmission power «Conventional DL TP B», «DL TP B» from the distanced base station «BS B» is required to increase further «TP excess», Conventional DL TP B» compared to handover according to the «Q-determined DL TP». Since the downlink range coverage of the distanced base station «BS B» is less than the downlink range coverage of the approached base station «BS A», as discussed in relation to figure 7, there is then, in addition to the negative impact of the increased transmission power, a great risk of UE losing connection due to no radio uplink being established to the approached base station «BS A», which can be caused by uplink not getting in sync in due time for handover. According to this illustrative example, however, as an uplink for handover can be established closer to the distanced base station «BS B», prerequisites can be fulfilled for a handover of both uplink and downlink to be satisfactorily accomplished in the intermediary between boundaries close to the DL-critical and UL-critical handover boundaries «DL-critical HO boundary», «UL-critical HO boundary». Apparently, figure 9 illustrates two advantages according to this illustrative example: reduced «TP excess» downlink transmission power «DL TP (B→A)», «DL TP A», «DL TP B» and reduced risk of losing connection due to UE connection with distanced base station «BS B» getting out of sync beyond downlink range coverage «DL-critical boundary». The greater downlink transmission power of the conventional handover further increases interference level in the cell served by the approached base station «BS A» and the cell served by the distanced base station «BS B». This interference increase is not balanced, in contrast to the case described above for uplink handover according to the invention. Further, conventional handover would put additional restrictions on low hysteresis levels, as an attempt to reduce the risk of dropped calls.

To achieve the advantages of the illustrative example described in relation to figures 4-9 a preferred power level of noise, injected at a (distanced) base station B in addition to noise possibly injected at a (approached) base station A, is determined (in dB or log-scale) as

$$N_{BA}=P_{CPICH,A}-P_{CPICH,B}-S_{BS,A}+S_{BS,B},$$

where, for a connection to be established to base station A serving cell A, $N_{BA}$ is power level difference of injected noise at base station B in relation to cell A for a handover boundary between the cells A and B; $P_{CPICH,A}$ is received transmission power in UE from base station A at the boundary; $P_{CPICH,B}$ is received transmission power in UE from base station B at the boundary; $S_{BS,A}$ is receiver sensitivity of base station A; and $S_{BS,B}$ is receiver sensitivity of base station B.

As an alternative noise injection level is determined independently at each base station (in dB or log-scale):

$$N_A=C+S_{BS,A}-P_{CPICH,A} \ ,$$
$$N_B=C+S_{BS,B}-P_{CPICH,B} \ ,$$

where $N_A$ is noise injection power level at base station A and $N_B$ is noise injection power level at base station B and C is a constant, which is preferably set equal to zero. Preferably noise is only injected conditionally, conditioned on the base station being the distanced base station or base station with one or more established links to the User Equipment ($N_A=0$ for base station A being the approached and base station B being the distanced base station), thereby both maximizing impact and keeping noise and interference levels at a minimum for most installations.

The absolute value of $N_{BA}$, $=N_B-N_A$, $|N_{BA}|$, reflects the power excess of noise injection, comparing cells. If conditions are such that $N_{BA}$, according to the expression above is positive for two cells, cell A and cell B, noise of power level $|N_{BA}|$ is added to the receiver path of base station B. Only positive noise power levels could be added to a receiver path. If $N_{BA}$, in accordance with the expressions above, would be negative for an approached cell A and a distanced cell B, preferably no noise is added.

It should be noted that noise or interference should be injected only for links being in sync. Also, noise or interference should preferably only be injected to links with SIR error below a particular threshold, e.g. 2 dB, in order to exploit receiver sensitivity for adjusting handover boundary only when this is needed. If the SIR error exceeds the particular threshold, this could be due to UE operating at its maximum power level and not being capable of further increasing it, according to the invention. The preferable particular SIR error threshold depends on configuration of outer power control loop in controlling RNC, CRNC.

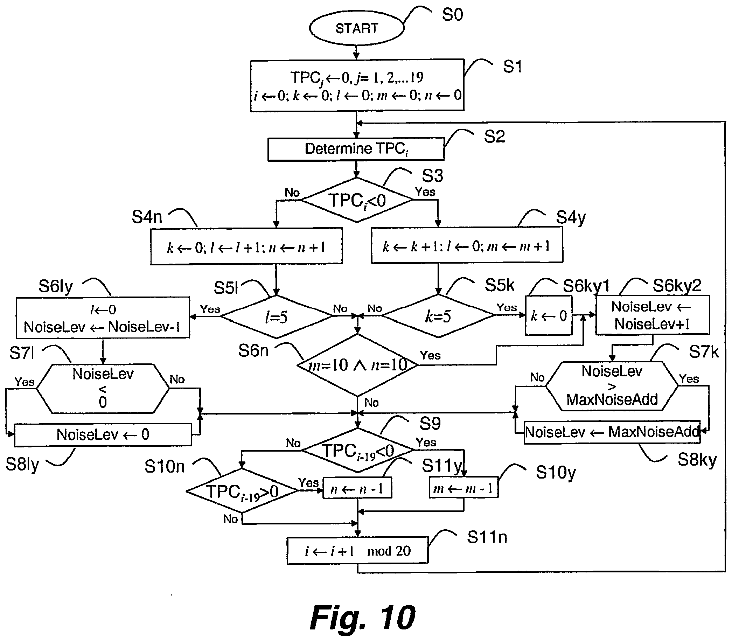

As an alternative to noise injection in the receiver path as described above a similar results is obtained according to a second illustrative example controlling noise addition in power control algorithm determining TPC ('Transmission Power Control') bits to send for uplink transmission power control. In figure 10 this is illustrated by an example flow chart:

- If there are 5 consecutive TPC bits sent from the base station all of which commanding UE to reduce transmission power, «$TPC_i$-<0», 1 dB of noise is added in the uplink transmission power control algorithm, unless the resulting added noise exceeds a maximum level «Max Noise Add».

- If there are 5 consecutive TPC bits sent from the base station all of which commanding UE to increase transmission power, $TPC_i$->0 (determined $TPC_i$ «Determine $TPC_i$», «$TPC_i$» being either positive or negative), 1 dB of noise is subtracted in the uplink transmission power control algorithm.

- If there are 10 TPC bits indicating a power increase, «$TPC_i$>0», and 10 TPC bits indicating a power decrease, «$TPC_i$<0», sent from the base station out of 20 consecutive TPC bits, 1 dB of noise is added in the uplink transmission power control algorithm, unless the resulting added noise exceeds a maximum level «Max Noise Add». The latest 20 consecutive TPC bits are considered, counting indices modulo 20. For this reason, the impact of oldest TPC-bit «$TPC_{i-19}$» is eliminated for each new TPC-bit value «Determine $TPC_i$». During initialization old TPC-bit values are preferably set to zero «$TPC_j$=0, j=1.2....19». When eliminating old TPC-bit values, impact of determined TPC-bits are considered and initialization values, $TPC_{i-19}$=0, are disregarded.

Described in more detail, figure 10 illustrates a method of initiating a number parameters «S1» for proper operation after start «S0». With a method depending on 20 TPC bits, TPC bits not yet available ($TPC_j$, $j$=1, 2, ...19) are initialized to zero thereby distinguishable from non-zero determined values, determined from measurement data. Counters i, k, 1, m, n are all set to zero.

For each iteration a TPC bit is determined «S2». If transmission power should increase, $TPC_i$ is greater than zero, and if transmission power should decrease, $TPC_i$ is less than zero.

If $TPC_i$ is less than zero «S3», it is considered «S4y» to be a candidate to be one of five consecutive equal TPC bits less than zero ($k\rightarrow k$+1). Obviously it is not one of five consecutively equal TPC-bits greater than zero ($l\rightarrow0$). It could be one of 10 TPC-bits less than zero out of 20 consecutive TPC bits ($m\rightarrow m$+1).

If $TPC_i$ is not less than zero «S3», it is considered «S4n» to be a candidate to be one of five consecutively equal TPC-bits greater than zero ($l\rightarrow l$+1). Obviously it is not one of five consecutively equal TPC-bits less than zero ($k\rightarrow0$). It could be one of 10 TPC-bits greater than zero out of 20 consecutive TPC bits ($n\rightarrow n$+1).

If $k$=5 «S5k» there has been five consecutive TPC-bits less than zero. Then another sequence of five consecutive TPC bits is initiated ($k\rightarrow0$) «S6ky1» and the noise equivalent level is increased (NoiseLev$\rightarrow$NoiseLev+1) «S6ky2». If $k\neq5$, there are not five consecutive equal TPC bits, but could as well be among 10 TPC bits greater than zero out of 20 consecutive TPC bits «S6n». If this is the case the noise equivalent is increased (NoiseLev$\rightarrow$NoiseLev+1) «S6ky2».

Similarly, if there are five consecutive non-negative TPC-bits «S6ly» another sequence of five consecutive TPC bits is initiated ($l\rightarrow0$) and the noise equivalent level is decreased (NoiseLev$\rightarrow$NoiseLev-1) «S6ly».

The noise equivalent level is checked not to be set less than zero «S7l», «S8ly» and not to be greater than a maximum level MaxNoiseAdd «S7k», «S8ky».

The method proceeds by phasing out old TPC bits, in the example the oldest out of 20 bits ($TPC_{i-19}$) is phased out «S9», «S10n», «S10y», «S11y». If the oldest TPC bit considered is less than zero «S9» then the record of number of negative TPC bits is decreased by one «S11y». If the TPC bit is not less than zero, it is checked whether it is greater than zero (or if it is non-zero) «S10n». If the oldest TPC bit considered is greater than zero «S10n» then the record of number of non-negative TPC bits is decreased by one «S11y». After appropriate adjustments of counters «S10y», «S11y» or if the TPC bit equals an initialization value from the initialization «S1» the TPC bit is phased out and the iteration counter and pointer to current position for buffered TPC bits is increased by one ($i\rightarrow i$ + 1 mod 20) «S11n». As a maximum of 20 consecutive TPC bits are considered it is increased modulo 20 «S11n».

A radio frame in WCDMA corresponds to 15 TPC bits. By the use of multiples of preferably 5 of TPC bits considered, rational number of TPC bits per radio frame is achieved. Further, 5 TPC bits is sufficiently short in time for short term or instantaneous power control slope detection and sufficiently great for a reliable result. The number of TPC bits preferred (20 TPC bits) for determining an average (longer term) slope is preferably a multiple of number of TPC bits considered for short term peak/instantaneous slope detection. However, the invention is not restricted to these preferred number of TPC bits, even if they imply realization advantages.

In a further illustrative example, noise/interference addition as described is initially included for a particular user equipment, UE, during handover. When the user equipment uplink gets in sync with an approached base station and the handover has been executed the noise/interference addition is interrupted and the distanced (old) base station is controlled to deliver TPC commands commanding power increases, thereby leaving effective transmission power control to the approached base station since UE is designed to transmit at least commanded power level when there are conflicting TPC commands. The distanced (old) base station stops the process when the handover is completed.

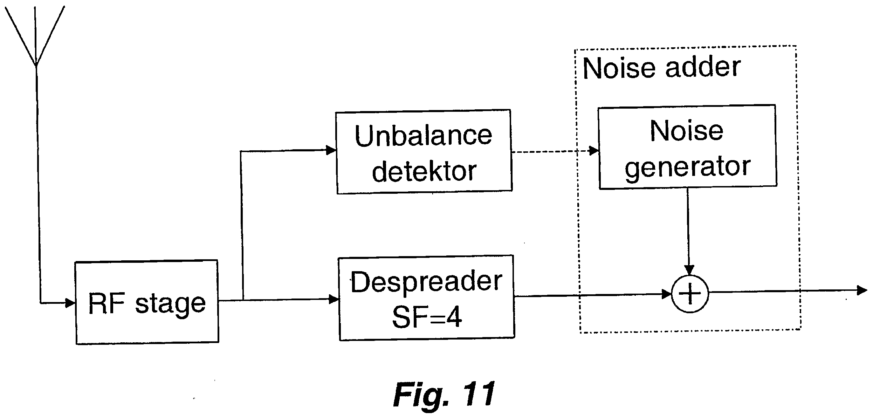

Figure 11 illustrates a principal block diagram of relevant parts of a base station operating according to the invention. Received signals are processed in an initial stage «RF stage» for filtering, frequency translation etc. rendering the signal appropriate for demultiplexing or despreading and detection of unbalances. The signal is further demultiplexed or despread, preferably with spreading factor 4 «Despreading SF=4» and unbalances are detected «Unbalance detector». Unbalances can be detected in various ways according to the invention. As an example uplink signal measurements can be performed by base station and compared to measurements performed by UE or performed by another base station and reported via UE or directly to the instant base station. Another example is base station relying entirely on reported level or ranges and comparing the reported values for determining compensation. Information on the detected unbalance is fed to a noise or interference generator «Noise generator» generating noise or interference of appropriate power level. The noise or interference is fed to an adder « »adding the generated noise or interference to the despread signal. The composed signal is output from the adder <AD». The combination of noise and interference generator «Noise generator» and adder forms a noise adder «Noise adder».

The invention is not restricted to particular acronyms used in the description or to particular systems mentioned. The invention covers all systems and equipment operating analogously to the described.

The invention is not intended to be limited only to the embodiments described in detail above. Changes and modifications may be made within the scope of the following claims.

**Claims**

1. A method of handover of radio communications connection, wherein the radio communications comprises base station radio coverage ranges of received radio frequency signals and transmitted radio frequency signals, and wherein the method **comprises:**

   detecting radio coverage range unbalances between downlink or uplink directions between a particular user equipment and different base stations (BS A, BS B),
   compensating radio coverage range unbalances between downlink and uplink directions between the particular user equipment and the different base stations (BS A, BS B),
   at least partially despreading one or more received signals from the particular user equipment in a Wideband Code Division Multiple Access, WCDMA, system wherein the method is **characterized in that** the compensating of the radio coverage range unbalances comprises:

   adding noise or interference to one or more received signals from the particular user equipment, wherein the adding of noise or interference comprises adding noise or interference posterior to the despreading of the one or more received signals for the particular user equipment, whereby signal components of the particular user equipment are enhanced.

2. The method according to claim 1, **characterized in that** the despreading of the one or more received signals despreads the one or more received signals with spreading factor 4.

3. The method according to claim 2, **characterized in that** the despread one or more received signals are further despread.

4. The method according to claim 3, **characterized in that** the further despreading comprises one or more steps of despreading by a factor of two.

5. The method according to claim 1, **characterized in that** the added noise or interference is determined in response to a comparison between performance of a base station (BS A) with an established connection and a base station (BS B) to which connection is going to be established.

6. The method according to claim 5, **characterized in that** the performance comparison includes base station receiver sensitivity.

7. The method according to claim 5, **characterized in that** the performance comparison includes base station transmission power received in user equipment.

8. The method according to claim 5, **characterized in that** the performance comparison includes base station antenna feeder cable attenuation.

9. The method according to claim 5 **characterized in that** the performance comparison includes base station antenna gain in relation to a particular User Equipment.

10. The method according to claim 1, **characterized in** that the added noise or interference are determined in response to a comparison between uplink and downlink performance of a base station (BS A, BS B).

11. The method according to claim 10, **characterized in that** the performance comparison includes base station antenna feeder cable attenuation.

12. The method according to claim 10, **characterized in that** the performance comparison includes base station antenna gain in relation to a particular User Equipment.

13. The method according to claim 1, **characterized in that** the added noise or interference are determined in response to requirements of a radio access bearer or the one or more services provided by the radio access bearer.

14. The method according to any of claims 1-13 **characterized in that** the noise or interference addition is interrupted when uplink to a base station (BS A), different from the base station (BS A) at which noise or interference is added gets in sync.

15. The method according to claim 14 **characterized in that** transmission power control of the base station (BS A) at which noise or interference is added commands a user equipment, to which the noise or interference addition is related, to increase transmission power until handover is completed or the base station (BS A) at which noise or interference addition is interrupted is no longer in the active set for the user equipment.

16. A base station (BS A) with radio coverage ranges of received radio frequency signals and transmitted radio frequency signals, the base station (BS A_) **comprises :**

   detector means arranged to detect radio coverage range unbalances between downlink or uplink directions a particular between a particular user equipment in a Wideband Code Division Multiple Access WCDMA system and different base stations (BS A, BS B); and
   compensating means configured to compensate for radio coverage range unbalances between downlink or uplink directions for the particular user equipment in relation to another base station (BS B), wherein the base station (BS A) is **characterized by**
   the compensation means comprising a noise or interference adder arranged to add noise or interference to one or more received signals from the particular user equipment, wherein the noise or interference adder is configured to comprise a noise or interference generator and an adder, and by
   despreading means being connected to the adder that is arranged to add noise or interference to the despread one or more received signals received from the particular user equipment, whereby signal components of the particular user equipment are enhanced.

17. The base station (BS A) according to claim 16, **characterized by** the despreading means being arranged to despread the one or more received signals with spreading factor 4.

18. The base station (BS A) according to claim 17, **characterized by** the despreading means being arranged to further despread the one or more received signals.

19. The base station (BS A) according to claim 18, **characterized in that** the dispreading means being arranged to further despread by being arranged to perform one or more steps of despreading by a factor of two.

20. The base station (BS A) according to claim 16, **characterized by** the detector means being arranged to detect range unbalances between a base station (BS A) with an established connection and a base station (BS B) to which connection is going to be established.

21. The base station (BS A) according to claim 16, **characterized by** the detector means being arranged to detect range unbalances including base station receiver sensitivity.

22. The base station (BS A) according to claim 16, **characterized by** the detector means being arranged to detect range unbalances including base station transmission power received in user equipment.

23. The base station (BS A) according to claim 16, **characterized by** the detector means being arranged to detect range unbalances including base station antenna feeder cable attenuation.

24. The base station (BS A) according to claim 16, **characterized by** the detector means being arranged to detect range unbalances including base station antenna gain in relation to a User Equipment connected to the base station.

25. The base station (BS A) according to claim 16, **characterized by** the detector means being arranged to detect range unbalances including base station transmission power received in user equipment and base station transmission power received in the base station (BS A).

26. The base station (BS A) according to claim 25, **characterized by** the detector means being arranged to detect range unbalances including base station antenna feeder cable attenuation.

27. The base station (BS A) according to claim 25, **characterized by** the detector means being arranged to detect range unbalances including base station antenna gain in relation to a User Equipment connected to the base station (BS A).

28. The base station (BS A) according to claim 16, **characterized by** the compensation means being arranged to add noise or interference in response to requirements of a radio access bearer or in response to the one or more services provided by the radio access bearer.

29. The base station (BS A) according to any of claims 17-2 8, **characterized in that** the base station (BS A) is configured to interrupt the noise or interference addition when uplink to a base station (BS B), different from the base station (BS A) at which noise or interference is added gets in sync.

30. The base station (BS A) according to claim 2 9 , **characterized in that**, a processing means is configured to control transmission power control of the base station (BS A) at which noise or interference is added is included to command a user equipment, to which the noise or interference addition is related, to increase transmission power until handover is completed or the base station (BS A) at which noise or interference addition is interrupted is no longer in the active set for the user equipment.

31. A communications system **characterized by** means for carrying out the steps of a method according to any of claims 1-15.

**Patentansprüche**

1. Verfahren der Weiterreichung einer Funkkommunikationsverbindung, wobei die Funkkommunikation Basisstationsfunkabdeckungsreichweiten von empfangenen Funkfrequenzsignalen und übertragenen Funkfrequenzsignalen umfasst und wobei das Verfahren Folgendes umfasst:

Detektieren von Funkabdeckungsreichweitenungleichheiten zwischen Abwärts- oder Aufwärtsrichtungen zwischen einer bestimmten Teilnehmereinrichtung und verschiedenen Basisstationen (BS A, BS B),
Kompensieren von Funkabdeckungsreichweitenungleichheiten zwischen Abwärts- und Aufwärtsrichtungen zwischen der bestimmten Teilnehmereinrichtung und den verschiedenen Basisstationen (BS A, BS B),
zumindest teilweises Entspreizen eines oder mehrerer von der bestimmten Teilnehmereinrichtung empfangener Signale in einem WCDMA-System (Wideband Code Division Multiple Access), wobei das Verfahren **dadurch gekennzeichnet ist, dass** das Kompensieren der Funkabdeckungsreichweitenungleichheiten Folgendes umfasst:

Hinzufügen von Rauschen oder Interferenz zu einem oder mehreren von der bestimmten Teilnehmereinrichtung empfangenen Signalen, wobei das Hinzufügen von Rauschen oder Interferenz das Hinzufügen von Rauschen oder Interferenz nach dem Entspreizen des einen oder der mehreren empfangenen Signale für die bestimmte Teilnehmereinrichtung umfasst, wobei Signalkomponenten der bestimmten Teilnehmereinrichtung verbessert werden.

2. Verfahren nach Anspruch 1, **dadurch gekennzeichnet, dass** das Entspreizen des einen oder der mehreren empfangenen Signale das eine oder die mehreren empfangenen Signale mit Spreizfaktor 4 entspreizt.

3. Verfahren nach Anspruch 2, **dadurch gekennzeichnet, dass** die entspreizten ein oder mehreren empfangenen Signale weiter entspreizt werden.

4. Verfahren nach Anspruch 3, **dadurch gekennzeichnet, dass** das weitere Entspreizen einen oder mehrere Schritte des Entspreizens um einen Faktor von zwei umfasst

5. Verfahren nach Anspruch 1, **dadurch gekennzeichnet, dass** das hinzugefügte Rauschen oder die hinzugefügte Interferenz in Reaktion auf einen Vergleich zwischen einer Leistung einer Basisstation (BS A) mit einer hergestellten Verbindung und einer Basisstation (BS B), zu der die Verbindung hergestellt werden soll, bestimmt wird.

6. Verfahren nach Anspruch 5, **dadurch gekennzeichnet, dass** der Leistungsvergleich eine Empfängerempfindlichkeit der Basisstation beinhaltet.

7. Verfahren nach Anspruch 5, **dadurch gekennzeichnet, dass** der Leistungsvergleich eine in der Teilnehmereinrichtung empfangene Übertragungsleistung der Basisstation beinhaltet.

8. Verfahren nach Anspruch 5, **dadurch gekennzeichnet, dass** der Leistungsvergleich eine Antennenzuführungskabeldämpfung der Basisstation beinhaltet.

9. Verfahren nach Anspruch 5, **dadurch gekennzeichnet, dass** der Leistungsvergleich eine Antennenverstärkung der Basisstation mit Bezug auf eine bestimmte Teilnehmereinrichtung beinhaltet.

10. Verfahren nach Anspruch 1, **dadurch gekennzeichnet, dass** das hinzugefügte Rauschen oder die hinzugefügte Interferenz in Reaktion auf einen Vergleich zwischen der Aufwärts- und Abwärtsleistung einer Basisstation (BS A, BS B) bestimmt werden.

11. Verfahren nach Anspruch 10, **dadurch gekennzeichnet, dass** der Leistungsvergleich eine Antennenzuführungskabeldämpfung der Basisstation beinhaltet.

12. Verfahren nach Anspruch 10, **dadurch gekennzeichnet, dass** der Leistungsvergleich eine Antennenverstärkung der Basisstation mit Bezug auf eine bestimmte Teilnehmereinrichtung beinhaltet.

13. Verfahren nach Anspruch 1, **dadurch gekennzeichnet, dass** das hinzugefügte Rauschen oder die hinzugefügte Interferenz in Reaktion auf Anforderungen eines Funkzugangsträgers oder den einen oder die mehreren vom Funkzugangsträger bereitgestellten Dienste bestimmt werden.

14. Verfahren nach einem der Ansprüche 1-13, **dadurch gekennzeichnet, dass** das Hinzufügen von Rauschen oder Interferenz unterbrochen wird, wenn die Aufwärtsverbindung zu einer Basisstation (BS A), die sich von der Basisstation (BS A) unterscheidet, an der Rauschen oder Interferenz hinzugefügt wird, synchronisiert wird.

15. Verfahren nach Anspruch 14, **dadurch gekennzeichnet, dass** eine Übertragungsleistungssteuerung der Basisstation (BS A), an der Rauschen oder Interferenz hinzugefügt wird, eine Teilnehmereinrichtung, auf die das Hinzufügen von Rauschen oder Interferenz bezogen ist, anweist, die Übertragungsleistung zu erhöhen, bis die Weiterreichung abgeschlossen oder die Basisstation (BS A), an der das Hinzufügen von Rauschen oder Interferenz unterbrochen wird, für die Teilnehmereinrichtung nicht mehr im aktiven Satz ist.

16. Basisstation (BS A) mit Funkabdeckungsreichweiten von empfangenen Funkfrequenzsignalen und übertragenen Funkfrequenzsignalen, wobei die Basisstation (BS A) Folgendes umfasst:

Detektormittel, die angeordnet sind, Funkabdeckungsreichweitenungleichheiten zwischen Abwärts- oder Aufwärtsrichtungen zwischen einer bestimmten Teilnehmereinrichtung in einem WCDMA-System (Wideband Code Division Multiple Access) und verschiedenen Basisstationen (BS A, BS B) zu detektieren; und Kompensationsmittel, die dazu ausgelegt sind, Funkabdeckungsreichweitenungleichheiten zwischen Abwärts- oder Aufwärtsrichtungen für die bestimmte Teilnehmereinrichtung mit Bezug auf eine andere Basisstation (BS B) zu kompensieren, wobei die Basisstation (BS A) **gekennzeichnet ist durch**

die Kompensationsmittel, die einen Rausch- oder Interferenzaddierer umfassen, um Rauschen oder Interferenz zu einem oder mehreren empfangenen Signalen von der bestimmten Teilnehmereinrichtung hinzuzufügen, wobei der Rausch- oder Interferenzaddierer dazu ausgelegt ist, einen Rausch- oder Interferenzgenerator und einen Addierer zu umfassen, und **durch** Entspreizungsmittel, die mit dem Addierer verbunden sind, der angeordnet ist, Rauschen oder Interferenz zu dem einen oder den mehreren entspreizten empfangenen Signalen, die von der bestimmten Teilnehmereinrichtung empfangen werden, hinzuzufügen, wobei Signalkomponenten der bestimmten Teilnehmereinrichtung verbessert werden.

17. Basisstation (BS A) nach Anspruch 16, **dadurch gekennzeichnet, dass** die Entspreizungsmittel angeordnet sind, das eine oder die mehreren empfangenen Signale mit Spreizfaktor 4 zu entspreizen.

18. Basisstation (BS A) nach Anspruch 17, **dadurch gekennzeichnet, dass** die Entspreizungsmittel angeordnet sind, das eine oder die mehreren empfangenen Signale weiter zu entspreizen.

19. Basisstation (BS A) nach Anspruch 18, **dadurch gekennzeichnet, dass** die Entspreizungsmittel angeordnet sind, weiter zu entspreizen, indem sie angeordnet sind, einen oder mehrere Schritte des Entspreizens um einen Faktor zwei durchzuführen.

20. Basisstation (BS A) nach Anspruch 16, **dadurch gekennzeichnet, dass** die Detektormittel angeordnet sind, zwischen einer Basisstation (BS A) mit einer hergestellten Verbindung und einer Basisstation (BS B), zu der die Verbindung hergestellt werden soll, Reichweitenungleichheiten zu detektieren.

21. Basisstation (BS A) nach Anspruch 16, **dadurch gekennzeichnet, dass** die Detektormittel angeordnet sind, Reichweitenungleichheiten einschließlich einer Empfängerempfindlichkeit der Basisstation zu detektieren.

22. Basisstation (BS A) nach Anspruch 16, **dadurch gekennzeichnet, dass** die Detektormittel angeordnet sind, Reichweitenungleichheiten einschließlich einer in der Teilnehmereinrichtung empfangenen Übertragungsleistung der Basisstation zu detektieren.

23. Basisstation (BS A) nach Anspruch 16, **dadurch gekennzeichnet, dass** die Detektormittel angeordnet sind, Reichweitenungleichheiten einschließlich einer Antennenzuführungskabeldämpfung der Basisstation zu detektieren.

24. Basisstation (BS A) nach Anspruch 16, **dadurch gekennzeichnet, dass** die Detektormittel angeordnet sind, Reichweitenungleichheiten einschließlich einer Antennenverstärkung der Basisstation mit Bezug auf eine mit der Basisstation verbundene Teilnehmereinrichtung zu detektieren.

25. Basisstation (BS A) nach Anspruch 16, **dadurch gekennzeichnet, dass** die Detektormittel angeordnet sind, Reichweitenungleichheiten einschließlich einer in der Teilnehmereinrichtung empfangenen Übertragungsleistung der Basisstation und einer in der Basisstation (BS A) empfangenen Übertragungsleistung der Basisstation zu detektieren.

26. Basisstation (BS A) nach Anspruch 25, **dadurch gekennzeichnet, dass** die Detektormittel angeordnet sind, Reichweitenungleichheiten einschließlich einer Antennenzuführungskabeldämpfung der Basisstation zu detektieren.

27. Basisstation (BS A) nach Anspruch 25, **dadurch gekennzeichnet, dass** die Detektormittel angeordnet sind, Reichweitenungleichheiten einschließlich einer Antennenverstärkung der Basisstation mit Bezug auf eine mit der Basisstation (BS A) verbundene Teilnehmereinrichtung zu detektieren.

28. Basisstation (BS A) nach Anspruch 16, **dadurch gekennzeichnet, dass** die Kompensationsmittel angeordnet sind, Rauschen oder Interferenz in Reaktion auf Anforderungen eines Funkzugangsträgers oder in Reaktion auf den einen oder die mehreren vom Funkzugangsträger bereitgestellten Dienste hinzuzufügen.

29. Basisstation (BS A) nach einem der Ansprüche 17-28, **dadurch gekennzeichnet, dass** die Basisstation (BS A) dazu ausgelegt ist, das Hinzufügen von Rauschen oder Interferenz zu unterbrechen, wenn die Aufwärtsverbindung zu einer Basisstation (BS B), die sich von der Basisstation (BS A) unterscheidet, an der Rauschen oder Interferenz hinzugefügt wird, synchronisiert wird.

30. Basisstation (BS A) nach Anspruch 29, **dadurch gekennzeichnet, dass** ein Verarbeitungsmittel dazu ausgelegt ist, die Übertragungsleistungssteuerung der Basisstation (BS A), an der Rauschen oder Interferenz hinzugefügt wird, zu steuern eingeschlossen ist, eine Teilnehmereinrichtung, auf die das Hinzufügen von Rauschen oder Interferenz bezogen ist, anzuweisen, die Übertragungsleistung zu erhöhen, bis die Weiterreichung abgeschlossen oder die Basisstation (BS A), an der das Hinzufügen von Rauschen oder Interferenz unterbrochen wird, für die Teilnehmereinrichtung nicht mehr im aktiven Satz ist.

31. Kommunikationssystem durch Mittel zum Ausführen der Schritte eines Verfahrens nach einem der Ansprüche 1-15 gekennzeichnet.

## Revendications

1. Procédé de transfert intercellulaire d'une connexion de radiocommunication, dans lequel la radiocommunication comprend des portées de couverture radio de stations de base de signaux de radiofréquence reçus et de signaux de radiofréquence transmis, et dans lequel le procédé comprend les étapes ci-dessous consistant à :

   détecter des disparités de portée de couverture radio entre des directions de liaison descendante ou de liaison montante, entre un équipement utilisateur spécifique et différentes stations de base (BS A, BS B) ;
   compenser les disparités de portée de couverture radio entre les directions de liaison descendante et de liaison montante, entre l'équipement utilisateur spécifique et les différentes stations de base (BS A, BS B) ;
   désétaler au moins partiellement un ou plusieurs signaux reçus à partir de l'équipement utilisateur spécifique dans un système d'accès multiple par répartition en code à large bande, WCDMA, dans lequel le procédé est **caractérisé en ce que** l'étape de compensation des disparités de portée de couverture radio comprend l'étape ci-dessous consistant à :

ajouter du bruit ou un brouillage à un ou plusieurs signaux reçus en provenance de l'équipement utilisateur spécifique, où l'étape d'ajout de bruit ou de brouillage consiste à ajouter du bruit ou un brouillage postérieurement au désétalement dudit un ou desdits plusieurs signaux reçus pour l'équipement utilisateur spécifique, moyennant quoi des composantes de signal de l'équipement utilisateur spécifique sont améliorées.

2. Procédé selon la revendication 1, **caractérisé en ce que** l'étape de désétalement dudit un ou desdits plusieurs signaux reçus désétale ledit un ou lesdits plusieurs signaux reçus avec un facteur d'étalement de quatre.

3. Procédé selon la revendication 2, **caractérisé en ce que** ledit un ou lesdits plusieurs signaux reçus désétalés sont désétalés davantage.

4. Procédé selon la revendication 3, **caractérisé en ce que** l'étape de désétalement supplémentaire comporte une ou plusieurs étapes de désétalement par un facteur de deux.

5. Procédé selon la revendication 1, **caractérisé en ce que** le bruit ou le brouillage ajouté est déterminé en réponse à une comparaison entre les performances d'une station de base (BS A) avec une connexion établie et d'une station de base (BS B) à laquelle une connexion est sur le point d'être établie.

6. Procédé selon la revendication 5, **caractérisé en ce que** la comparaison de performances inclut une sensibilité de récepteur de station de base.

7. Procédé selon la revendication 5, **caractérisé en ce que** la comparaison de performances inclut une puissance de transmission de station de base reçue dans l'équipement d'utilisateur.

8. Procédé selon la revendication 5, **caractérisé en ce que** la comparaison de performances inclut une atténuation de câble d'alimentation d'antenne de station de base.

9. Procédé selon la revendication 5, **caractérisé en ce que** la comparaison de performances inclut un gain d'antenne de station de base relativement à un équipement utilisateur spécifique.

10. Procédé selon la revendication 1, **caractérisé en ce que** le bruit ou le brouillage ajouté est déterminé en réponse à une comparaison entre les performances de liaison montante et de liaison descendante d'une station de base (BS A, BS B).

11. Procédé selon la revendication 10, **caractérisé en ce que** la comparaison de performances inclut une atténuation de câble d'alimentation d'antenne de station de base.

12. Procédé selon la revendication 10, **caractérisé en ce que** la comparaison de performances inclut un gain d'antenne de station de base relativement à un équipement utilisateur spécifique.

13. Procédé selon la revendication 1, **caractérisé en ce que** le bruit ou le brouillage ajouté est déterminé en réponse aux exigences d'une porteuse d'accès radio ou audit un ou auxdits plusieurs services fournis par la porteuse d'accès radio.

14. Procédé selon l'une quelconque des revendications 1 à 13, **caractérisé en ce que** l'ajout de bruit ou de brouillage est interrompu lorsque la liaison montante vers une station de base (BS A), différente de la station de base (BS A) à laquelle du bruit ou un brouillage est ajouté, se synchronise.

15. Procédé selon la revendication 14, **caractérisé en ce qu'**une commande de puissance de transmission de la station de base (BS A) à laquelle du bruit ou un brouillage est ajouté ordonne à un équipement d'utilisateur, auquel l'ajout de bruit ou de brouillage est connexe, d'augmenter une puissance de transmission jusqu'à ce qu'un transfert intercellulaire soit achevé, ou jusqu'à ce que la station de base (BS A), à laquelle l'ajout de bruit ou brouillage est interrompu, ne soit plus dans l'ensemble actif pour l'équipement d'utilisateur.

16. Station de base (BS A) avec des portées de couverture radio de signaux de radiofréquence reçus et de signaux de radiofréquence transmis, la station de base (BS A) comportant :

un moyen de détecteur agencé de manière à détecter des disparités de portée de couverture radio entre des directions de liaison descendante ou de liaison montante, entre un équipement utilisateur spécifique dans un système d'accès multiple par répartition en code à large bande, WCDMA, et différentes stations de base (BS A, BS B);
un moyen de compensation configuré de manière à compenser des disparités de portée de couverture radio entre les directions de liaison descendante et de liaison montante pour l'équipement utilisateur spécifique relativement à une autre station de base (BS B), dans laquelle la station de base (BS A) est **caractérisée en ce que** :

le moyen de compensation comporte un additionneur de bruit ou brouillage agencé de manière à ajouter du bruit ou un brouillage à un ou plusieurs signaux reçus en provenance de l'équipement utilisateur spécifique, dans laquelle l'additionneur de bruit ou de brouillage est configuré de manière à comporter un générateur de bruit ou de brouillage et un additionneur, et **en ce que** un moyen de désétalement est connecté à l'additionneur qui est agencé de manière à ajouter du bruit ou un brouillage audit un ou plusieurs signaux reçus désétalés, reçus en provenance de l'équipement utilisateur spécifique, moyennant quoi des composantes de signal de l'équipement utilisateur spécifique sont améliorées.

17. Station de base (BS A) selon la revendication 16, **caractérisée en ce que** le moyen de désétalement est agencé de manière à désétaler ledit un ou lesdits plusieurs signaux reçus avec un facteur d'étalement de quatre.

18. Station de base (BS A) selon la revendication 17, **caractérisée en ce que** le moyen de désétalement est agencé de manière à désétaler davantage ledit un ou lesdits plusieurs signaux reçus.

19. Station de base (BS A) selon la revendication 18, **caractérisée en ce que** le moyen de désétalement agencé de manière à désétaler davantage est agencé de manière à mettre en oeuvre une ou plusieurs étapes de désétalement par un facteur de deux.

20. Station de base (BS A) selon la revendication 16, **caractérisée en ce que** le moyen de détecteur est agencé de manière à détecter des disparités de portée entre une station de base (BS A) avec une connexion établie et une station de base (BS B) à laquelle une connexion est sur le point d'être établie.

21. Station de base (BS A) selon la revendication 16, **caractérisée en ce que** le moyen de détecteur est agencé de manière à détecter des disparités de portée incluant une sensibilité de récepteur de station de base.

22. Station de base (BS A) selon la revendication 16, **caractérisée en ce que** le moyen de détecteur est agencé de manière à détecter des disparités de portée incluant une puissance de transmission de station de base dans un équipement d'utilisateur.

23. Station de base (BS A) selon la revendication 16, **caractérisée en ce que** le moyen de détecteur est agencé de manière à détecter des disparités de portée incluant une atténuation de câble d'alimentation d'antenne de station de base.

24. Station de base (BS A) selon la revendication 16, **caractérisée en ce que** le moyen de détecteur est agencé de manière à détecter des disparités de portée incluant un gain d'antenne de station de base relativement à un équipement utilisateur connecté à la station de base.

25. Station de base (BS A) selon la revendication 16, **caractérisée en ce que** le moyen de détecteur est agencé de manière à détecter des disparités de portée incluant une puissance de transmission de station de base reçue dans l'équipement d'utilisateur et une puissance de transmission de station de base reçue dans la station de base (BS A).

26. Station de base (BS A) selon la revendication 25, **caractérisée en ce que** le moyen de détecteur est agencé de manière à détecter des disparités de portée incluant une atténuation de câble d'alimentation d'antenne de station de base.

27. Station de base (BS A) selon la revendication 25, **caractérisée en ce que** le moyen de détecteur est agencé de manière à détecter des disparités de portée incluant un gain d'antenne de station de base relativement à un équipement utilisateur connecté à la station de base (BS A).

28. Station de base (BS A) selon la revendication 16, **caractérisée en ce que** le moyen de compensation est agencé de manière à ajouter du bruit ou un brouillage en réponse aux exigences d'une porteuse d'accès radio, ou en réponse audit un ou auxdits plusieurs services fournis par la porteuse d'accès radio.

29. Station de base (BS A) selon l'une quelconque des revendications 17 à 28, **caractérisée en ce que** la station de base (BS A) est configurée de manière à interrompre l'ajout de bruit ou de brouillage lorsque la liaison montante vers une station de base (BS B), différente de la station de base (BS A) à laquelle le bruit ou le brouillage est ajouté, se synchronise.

30. Station de base (BS A) selon la revendication 29, **caractérisée en ce que**, un moyen de traitement, qui est configuré de manière à commander une commande de puissance de transmission de la station de base (BS A) à laquelle du bruit ou un brouillage est ajouté, est inclus, en vue d'ordonner à un équipement d'utilisateur, auquel l'ajout de bruit ou de brouillage est connexe, d'augmenter une puissance de transmission jusqu'à ce qu'un transfert intercellulaire soit achevé, ou jusqu'à ce que la station de base (BS A), à laquelle l'ajout de bruit ou brouillage est interrompu, ne soit plus dans l'ensemble actif pour l'équipement d'utilisateur.

31. Système de communication **caractérisé par** des moyens pour mettre en oeuvre les étapes d'un procédé selon l'une quelconque des revendications 1 à 15.

**Fig. 1**

**Fig. 2**

SF=1
SF=2
SF=4
SF=8
SF=16

**Fig. 3**

UL A  UL B

BS A  BS B

DL A  DL B

DL-critical HO region

**Fig. 4**

**Fig. 5**

EP 1 794 900 B1

**Fig. 6**

EP 1 794 900 B1

*Fig. 7*

**Fig. 8**

EP 1 794 900 B1

*Fig. 9*

EP 1 794 900 B1

**Fig. 10**

*Fig. 11*

**EP 1 794 900 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0232017 A
- US 6011971 A
- US 6134444 A
- US 5548812 A
- US 5584049 A
- EP 0546849 A
- WO 9734439 A